(19) Europäisches Patentamt
European Patent Office
Office européen des brevets

(11) **EP 4 254 337 A1**

(12) **EUROPEAN PATENT APPLICATION**

(43) Date of publication:
**04.10.2023 Bulletin 2023/40**

(21) Application number: **23152106.3**

(22) Date of filing: **17.01.2023**

(51) International Patent Classification (IPC):
***G06T 9/20*** *(2006.01)*

(52) Cooperative Patent Classification (CPC):
**G06T 9/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **University of Maribor
2000 Maribor (SI)**

(72) Inventors:
• **Strnad, Damjan**
**2000 Maribor (SI)**
• **Zlaus, Danijel**
**2000 Maribor (SI)**
• **Nerat, Andrej**
**2000 Maribor (SI)**
• **Zalik, Borut**
**2000 Maribor (SI)**

(74) Representative: **Patentni Biro AF d.o.o.
Kotnikova 32, p.p. 2706
1001 Ljubljana (SI)**

(54) **A PROCEDURE FOR ENCODING AND DECODING OF BINARY IMAGES USING CHAIN CODES**

(57) The invention relates to a procedure for encoding and decoding binary images using an 8-directional Freeman chain code. Binary images are used today in machine learning as masks to indicate regions of interest in input data or ground truth values in image segmentation. Since large amounts of training data are required for effective learning of complex models such as deep neural networks, efficient storage of data in compact encoded form and their quick recall by decoding are very important. The invention describes the procedure for encoding and storing binary images, which is adapted for their parallel reconstruction, as well as the decoding procedure, which uses one pass of each chain code and simple control logic to enable efficient execution on modern parallel hardware. On real life data, such as masks of cadastre, road networks or vegetation areas, despite the potentially higher number of coloured pixels such decoding can be faster than existing approaches that use multiple processing of individual chain codes or more complex data structures to determine the colouring segments.

Figure 3

EP 4 254 337 A1

**Description**

**Field of invention**

The invention belongs to the field of computer science and informatics, and relates to a procedure of encoding and decoding binary images with chain codes, which enables their space-efficient storage and time-efficient reconstruction. The invention also relates to a binary format for storing the encoded regions that is adapted for fast decoding with parallel threads.

**Background of invention and technical problem**

The encoding and decoding (reconstruction) of binary images using chain codes is known for a long time. The existing approaches mainly focus on encoding and decoding of smaller images, where the encoding usually ends with the conversion to a sequence of chain code symbols. While the encoding is not time-critical as it is usually performed only once, for efficient repetitive decoding it is necessary to prescribe an appropriate binary notation of the encoded image that allows easy multi-threaded implementation of decoding.

The development of technology leads to growing amounts of remotely captured data from which increasingly accurate and comprehensive binary images can be derived by segmentation procedures, which are used to mask other spatially and temporally aligned data in machine learning applications. These types of masks are mainly used to mark regions of interest in input image data or as target outputs for learning automatic image segmentation.

Because large amounts of training data are necessary for successful machine learning, its efficient storage and retrieval represent an important technical challenge. Training of complex models usually takes several iterations, where only a subset of training data can be used in each iteration due to memory capacity limitations. A solution with on-the-fly loading of data from external sources is very inefficient, therefore it is favorable to keep the training data in memory in a compact (compressed) form and expand it to the original training format on demand right before it is used. Because the process needs to be repeated in case of multiple training cycles, it is essential that the encoding format and the decoding mechanism are adapted for efficient parallel implementation of mask reconstruction. It should also be considered that linear execution of arithmetic and logical operations on the CPU is more efficient than branching, therefore a theoretically smaller number of performed operations does not necessarily lead to a more efficient procedure. The technical problem addressed by the present invention is the design of a complete process from the conversion of a binary image into a group of chain codes, their storage in the format that allows efficient parallel reconstruction of the image, and the implementation of the reconstruction method in a way adapted to modern processor architectures.

**State of the art**

The notion of chain coding is present in all patent databases. The majority of inventions deal with encoding of input raster images using a chain code, where some of the approaches introduce new types of chain code to describe the contours of objects in the image with the goal of improving space efficiency. Some inventions address the conversion in the opposite direction, i.e. vectorization of objects described by chain codes. In the first part of survey that follows we summarize several related patents. In the second part we summarize non-patent publications, i.e. scientific journal and conference papers that address the problem of region filling in raster images, for which the contours are either already given in the form of chain codes, or they are generated on the fly from an input raster image. The proposed approaches focus on the correctness of binary image reconstruction and improvement of algorithm's time and/or space complexity.

The patent EP0375805B1 describes the procedure for vectorization of an object in a binary image, whose boundary is described by a Freeman 8-directional chain code. The procedure assumes that the outer object border is coded counterclockwise from the start pixel, which is the first pixel of the object found by scanning successive scan lines. For objects with holes, the assumption is that the inner object boundaries are coded clockwise. Encoding is done with one pass of the object boundary, with the possible directions of the next move constrained by the direction of the last move. Characteristic corner pixels, which are not necessarily elements of the coded boundary of the object, are then extracted from the chain code by vectorization. By scanning the chain code, the locations of line endpoints are determined, some of which are omitted in the final vectorization according to the rules specified in the patent.

In patent US5577134A, a procedure for segmented image encoding is proposed, which includes an 8-directional chain encoder in the first step. If necessary, the encoded image is additionally compressed through several stages of a hierarchical encoder, each of which lowers the image resolution. The number of stages required is determined by the control element, which analyzes the chain code to determine whether it can be losslessly compressed to the prescribed packet size. The conversion of a higher resolution image to a lower resolution is done by processing blocks of 2x2 pixels, which represent superpixels in the coarse image. The differences between the individual levels of the compressed image are stored as pairs of complementary vectors, which determine the movements between or within the coarse pixels and are separately compressed with a variable length code.

Patent US8340446B2 describes an apparatus for automatic generation of a chain code from a captured binary image. The device consists of an image input unit, an image storing unit and a code generating unit. The input unit converts the input image signal into a binary digital signal, while the image storage unit contains two buffers in which the output of the input unit is stored alternately. The code generating unit is activated if any of the buffers is full. Encoding starts in the first lit pixel encountered according to the order of data flow into the buffer, which can be rows from top to bottom or vice versa, or columns from the left or right side of the image. The search for the next move is done in a clockwise or counter-clockwise direction, with the starting direction also being determined by the order in which the image data flows into the buffer. The direction code table is a rotation of Freeman's 8-directional chain code.

Part of the patent US5995670A prescribes a special three-point chain code to describe object contours in video compression, by which a better compression ratio is achieved at the expense of an acceptable loss of detail. The proposed code is based on the observation that the vast majority of movements during contour traversal are in the same direction as the previous movement or are offset from the previous movement by 45 degrees to the left or right. Pairs of such consecutive move directions are called conformal directions, and are assigned optimal Huffman codes. When traversing the object contour, the method checks the triplets of consecutive move directions and, if they do not consist of two pairs of conformal directions, replaces them with one pair of conformal directions. With this, when coding a contour, any changes in direction by an angle greater than or equal to 90 degrees are replaced in a lossy manner by the corresponding shortcuts.

Patent CN109035351A introduces a new type of chain code to describe regions in binary images. The proposed chain code describes a counterclockwise walk along the outer edges of region's boundary pixels. Each boundary pixel is encoded with symbol 1-3, which represents the number of edges of the pixel that are the outer edges of the region. Isolated pixels with four outer edges are encoded as a sequence 33. Since the number of outer edges of a pixel alone does not unambiguously determine the course of the region boundary, the symbol 0 is used to change the direction perpendicular to the last move direction.

Patent US6937765B2 describes a procedure for tracing of object contours in binary images and encoding them with an 8-directional chain code. The image coordinate system is defined so that integer coordinates are aligned with pixel centers. The traversal starts at the first pixel of the object, which is found by scanning successive lines of the image from left to right, and runs along the centers of the outer edges of the pixels on the object contour. The patent prescribes a counter-clockwise direction of traversal for encoding the external and a clockwise direction for encoding the internal contours, i.e. holes, if a neighbourhood of eight adjacent points (4 corner points and 4 edge centers) is considered. For encoding with only four adjacent edge centers the rule is exactly the opposite. During the traversal, the external and all internal contours belonging to the same object are marked with the same label. Whether a contour is an outer one or an inner one is determined during the line scan based on the number of transitions between background and foreground pixels. For this purpose, an additional array of the same size as the input image is used.

Patent US6173075B1 in one part describes a method for vectorization of binary images, where the regions and holes embedded in them are converted into sequences of vectors between midpoints of outer pixel edges on object contours. The transformation is performed by traversing the outer edge of the object in a counterclockwise direction or the inner edge of the object in a clockwise direction, making movements in four directions between neighbouring pixels of the region. In the current pixel, a clockwise scan of the four immediate neighbours is performed, choosing the direction opposite to the direction of entry into the pixel as the initial scan direction. For each pixel, information is kept on whether it has already been visited and which search directions have already been completed. During neighbour inspection, the midpoints of those edges of the current pixel that represent the transition between the region and the background in the image are added to a separate circularly linked dynamic list. If during the inspection of the neighbours we come across an unvisited pixel that belongs to the region, we move to a new pixel. This becomes the new current pixel, and the movement direction in the previous pixel is not marked as completed. The traversal process is completed at the starting pixel after all directions have been examined.

Patent DE102005045394B4 contains a procedure for extraction and chain coding of region contours from binary images. The procedure first determines, for each pixel in the image that has the colour of the region of interest, the number of contours passing through the pixel based on the colours of its eight neighbours. Then it starts with the sequential extraction of object's contours, where it first finds the starting pixel with a non-zero contour value by sequentially scanning the rows of the image from left to right. The extraction of external and internal contours is done according to different rules, so after finding the starting pixel, the type of contour is determined first. The first contour is always the outer one. During the extraction of the outer contour, virtual colouring of the pixels lying to the left of the contour pixels is performed. For each subsequent starting pixel, a check is made to see if the pixel to the left of it is in the region colour or virtually painted - in this case it is the inner contour, otherwise it is the outer contour. For each pixel of the extracted contour, the contour counter is decremented by one, and the search for the move to the next pixel is always initiated in the direction that is to the right of the arrival direction for external contours or left to the arrival direction for internal contours. The directions of possible movements are checked counterclockwise for outer and clockwise for inner contours until we encounter a neighbouring pixel that is in the colour of the region. In this case, it is possible to limit the movements to four directly adjacent pixels in the same row or column of the image. The sequences of visited pixels are recorded in a list, and the movements between them as an 8-directional chain code.

In the paper »Restoration of Binary Images Using Contour Direction Chain Codes Description«, Computer Vision, Graphics and Image Processing, 41, pp. 101-106, 1988, Cai presents a method for filling the regions in a binary raster image based on their description with 8-directional Freeman code. The description of the regions in the image is textual with special characters for marking the beginning and end of each chain code as well as the end of the string. Each contour is described by a starting pixel and a sequence of chain code symbols. During the passage of each chain code, the algorithm determines, depending on the combination of the reaching and leaving symbols of the chain code, whether the current pixel represents the endpoint of a segment or a singular pixel in the corresponding line. Pixels that are marked as endpoints twice are reclassified as singular pixels. To reconstruct the image, the algorithm uses two arrays A and B of the same size as the original image. In array A, the algorithm marks the locations of segment endpoints, and in B, the locations of singular pixels. After the completion of the processing of all contours, segment colouring is performed between successive pairs of marked pixels in array A. Finally, the contents of fields A and B are combined with the logical or operation.

In the paper »A New Algorithm for Extracting the Interior of Bounded Regions Based on Chain Coding«, Computer Vision, Graphics and Image Processing, 43, pp. 256-264, 1988, Ali and Burge present an algorithm for encoding and decoding of regions in a binary image based on an 8-directional chain code. The encoding is performed by categorizing the pixels of the region into one of five classes (isolated point I, endpoint E, internal point of segment U, attractant multi-way junction M and potential multi-way junction W) according to the number of neighbouring pixels and the number of transitions between the background and the region in cyclic neighbour inspection. Contour extraction begins by searching for pixels E and following the neighbours until the next pixel E or a junction, which we connect with the nearest pixel M. When no more pixels E are found, the remaining closed contours are extracted by tracing from the found pixels U. During the traversal, all visited pixels with the exception of M are removed. The sequence of movements is encoded by symbols 1 to 8, while symbol 0 represents demarcations between contours. In image reconstruction, each contour pixel is categorized as a start filling point, stop filling point, vertex point, or tangent point based on the entering and exiting directions for the pixel. Pixels that are visited multiple times during the chain code inspection are multi-junction points. Multi-junction points and tangent points are considered as part of the region when colouring the interior of the region, while vertex points are considered as such only under certain conditions.

The paper »Region Filling with the use of the discrete Green theorem«, Computer Vision, Graphics and Image Processing, 42, pp. 297-305, 1988, by Tang and Lien describes a procedure for region filling that classifies the contour pixels into left, right, and tip points, where the definition of left and right points is inverted for outer and inner contours. Contour pixels that are visited multiple times are classified as both left and right. For every other pixel in the image that does not belong to the contour, we can determine whether it lies inside the region based on the number of marked left and right contour pixels located in the row to the right of the observed pixel. Pixels inside the region can then be used as seed pixels to colour line segments. To speed up the process, Tang's method reduces the number of seed pixel searches by considering correlations between adjacent image rows.

In the paper »A Fast Algorithm for the Restoration of Images Based on Chain Codes Description and Its Applications«, Computer Vision, Graphics and Image Processing, 50, pp. 296-307, 1990, Chang and Leu present an improved region filling algorithm, which stores the boundary pixels visited during chain code processing in an associative array using the y coordinate as a key and the corresponding $x$ coordinates recorded in a non-decreasing order. In doing so, it classifies the pixels into singular points, which are recorded twice in the array, marking points, which are recorded once, and skipping points, which are ignored. After the chain code processing is finished, the algorithm performs segment colouring between consecutive pairs of $x$ coordinates for each y, which does not require an additional array like Cai's algorithm. To reconstruct regions with holes, it is necessary to first fill the region defined by the outer boundary, erase the region defined by the inner boundary, and then turn back on the pixels of the inner boundary.

In the paper »Reconstruction of Binary and Gray-Scale Images from Mid-crack Code Descriptions«, Journal of Visual Communication and Image Representation, 4(2), pp. 121-129, 1993, Shih and Wong describe an algorithm for filling regions represented by mid-crack chain code. The type of the boundary pixel is determined based on the number of visits to its vertical edges. This also determines the number of times the pixel is recorded in an associative array, which is the same as in the paper by Chang&Leu. The paper also describes an extension of the procedure for colouring regions in grayscale images. In a later paper »An Improved Fast Algorithm for the Restoration of Images Based on Chain Codes Description«, CVGIP: Graphical Models and Image Processing, 56(4), str. 348-351, 1994, the same authors present an improvement of Chang's algorithm, which resolves incorrect handling of some reaching and leaving code combinations for boundary pixels, and eliminates the need to redraw the inner boundaries when filling regions with holes. However, it is still necessary to process all of the nested chain codes and maintain an associative array with sorted segment endpoints before painting a region.

In the paper »A New Contour Fill Algorithm for Outlined Character Image Generation«, Computers & Graphics, 19(4), pp. 551-556, 1995, Lejun and Hao use chain coding of contours for font rasterization, where the symbol silhouettes are represented as Bézier curves. Rasterization is executed with three successive passes of all contours of the symbol. During the first pass, a recursive decomposition of the Bézier curves is performed, whereby the segments, which are reduced to the size of a single pixel, are coded with an 8-directional chain code. Chain code symbols are written with four bits, three of which indicate the move direction. The fourth bit is a flag that indicates the pixels into which several parts of the contour map. To correctly determine the values of the flags, a second pass of each contour is required, during which the contours are drawn. The last pass fills the interior of the regions starting from each contour pixel and proceeding to the left or right within the row, using the flag value and direction of the contour flow in the pixel to prevent overpainting.

Shim and Dorai propose a method for labeling the regions in binary or segmented images, based on the use of 8-directional chain code, in the paper »A Generalized Region Labeling Algorithm for Image Coding, Restoration, and Segmentation«, Proceedings 1999 International Conference on Image Processing, pp. 46-50, 1999. The chain coding of each region is done by searching for its starting pixel along the rows of the image, followed by a counter-clockwise traversal of the edge pixels according to the rightmost neighbour rule. In image reconstruction, based on the combination of entering and exiting code, each pixel is classified into one of five classes (beginning of segment B, end of segment E, singular pixel S, skipping pixel, and unsuitable pixel indicating a wrong code). The current region label is immediately assigned to pixels S in the image. Pixels B are stored in a special queue, while pixels E are marked in the image itself. Skipping pixels are ignored. After returning to the starting point, we sequentially remove the coordinates of pixels B from the queue and move along the corresponding image row, marking the pixels with the label of the current region until we reach pixel E or a background pixel. In the latter case, an immediate traversal of the inner region contour is performed according to the same principle, but in a clockwise direction, as a result of which the roles of pixels B and E are reversed. All B pixels on the inner contour are added to the end of the row. Marking of the current region is completed when the queue is empty.

Algorithm for reconstruction of binary images from chain-coded regions, based on fast detection of starting locations of horizontal filling segments, was presented by Ren et al. in the paper »A new and fast contour-filling algorithm«, Pattern Recognition, 38, pp. 2564-2577, 2005. The colouring of the region takes place by tracing the boundary pixels of the region on the basis of chain-coded steps, whereby for each pixel the sum of signed horizontal and vertical moves through the pixel is kept. Based on the sum value, boundary pixels are classified as filling starting points, filling ending points, or filling skipping points. Three different colours are used to indicate the three types of points in the image. After colouring the boundary pixels, the region is filled line by line from each marked filling starting point to the first filling ending point. The direction of filling is determined by the type of contour (external or internal), which is determined by the sign of the sum of the rotation angles made while tracing the region boundary. The algorithm processes each contour five times.

In the paper »Note: An algorithm for contour-based region filling«, Computers & Graphics, 29, pp. 441-450, 2005, Codrea and Nevelainen describe an algorithm for filling regions in raster images, which performs the region contour traversal and classifies boundary pixels as right (R), left (L), bottom (B) or top (T). Marking is performed on pairs of consecutive pixels according to the direction of movement between them, and for certain combinations of consecutive movements double marks are applied to pixels. Filling is done by scanning rows and filling segments between consecutive pairs of L and R pixels.

Hong et al. used a similar approach in the paper »Flotation Bubble Seed Image Filling Algorithm Based on Boundary Point Features«, International Journal of Mining Science and Technology, 22, pp. 289-293, 2012, where the boundary pixels are classified during contour traversal as left, right, concave and convex points based on a look-up table. Pixel marks are stored in the image, while region filling is performed by colouring the segments between matching pairs of left and right points within image rows.

In the paper »A Fast Filling Algorithm for Image Restoration Based on Contour Parity«, Computers, Materials & Continua, 63(1), pp. 509-519, 2020, Liu et al. present an algorithm for region filling that traverses chain codes of all regions twice, during which the boundary pixels are classified as left (L), right (R) and duple (LR). In the first pass, pixels R and LR are filled in the image, and in the second pass, for each pixel L found, the segment to the right is filled up until the first pixel R. The algorithm improves the theoretical time complexity compared to previous approaches.

The main goal of existing approaches is the correctness and speed of image reconstruction from chain codes, where all of the methods use a common format for describing the encoded regions using the symbols of 8-directional codes. Existing methods achieve filling efficiency by recording the exact segments that need to be painted and thus minimizing the number of coloured pixels. The disadvantage of this approach is that in order to fill regions with holes, it is necessary to first process all nested chain codes and mark the filling segments in the image itself or keep an ordered list of horizontal coordinates of the segment endpoints.

**Description of the solution to the technical problem**

The invention overcomes the weaknesses of existing approaches and includes several aspects as defined in the independent patent claims. Preferred embodiments of the invention are defined in the dependent claims. The first aspect of the invention relates to a procedure for encoding binary images, the second aspect to a binary notation of encoded regions, and the third to a procedure for decoding binary images.

The invention uses chain codes in eight directions to form a stream of coded regions, wherein the invention is characterized in that any holes in the images are analysed as separate nested regions within a larger region. Holes are encoded in the same way as the original object, while known approaches encode objects with holes via the outer and inner edges of the object with a changed orientation of the chain code. The order of colouring regions and holes in the method according to the invention is arbitrary, and a simpler data structure that does not need to be sorted is used for recording segments, which is also different from the previously known solutions.

The first aspect of the invention relates to a procedure that defines a sequence of steps for encoding and decoding binary images with chain codes in eight directions, preferably 8-directional Freeman chain codes, which enables their space-efficient storage and time-efficient reconstruction. The binary format of encoded regions, which is the result of the encoding procedure and represents the second aspect of the invention, is a balanced compromise between the length of the stream and the efficiency of the parallel decoding implementation with multiple processor threads (sequences of instructions that run on a processor in parallel with other threads and perform certain tasks) with no need for their communication. None of the above-mentioned documents discloses a procedure that includes the same steps for encoding and decoding, or lists them in the order described below, while the present invention also solves the problem of storing the encoded regions and simplifying the procedure with a single pass of each contour for efficient parallel decoding. The third aspect of the invention is the procedure for decoding binary images based on the binary format of encoded regions according to the invention, which is simpler and more efficient for parallel execution compared to known solutions.

The procedure described below assumes that the binary image is given in the form of a bit field, i.e., an image with a colour depth of one bit. Encoding the image into a spatially efficient record is achieved by describing the outer perimeters (boundaries) of all regions in the image, including nested holes, with independent chain codes. Here, each group of 8- or 4-adjacent connected pixels of the same colour represents an individual region. In the following, we use the term chain code to denote the entire sequence of symbols used to encode an individual region. The encoded image is represented by a binary stream (record), to which we successively add the necessary information about the image and individual regions. Let us assume that the foreground colour used to mark the regions of interest in the image is white, while the background and holes are black. Since for certain forms of binary images used as masks in machine learning it is more efficient to encode the background than the regions of interest, let A denote the active colour, which is equal to 0 for black and 1 for white. The active colour is the colour of the areas in the image that are actually encoded in the continuation. The opposite colour from the active colour is used to initialize the image in the decoding procedure.

The procedure for encoding binary images using chain codes according to the invention comprises the following steps:

a) reading or defining the size of an image and finding the first, i.e. starting, pixel of the active colour by sequentially scanning rows of the image, wherein the user determines which is the active colour, i.e., 0 or 1;

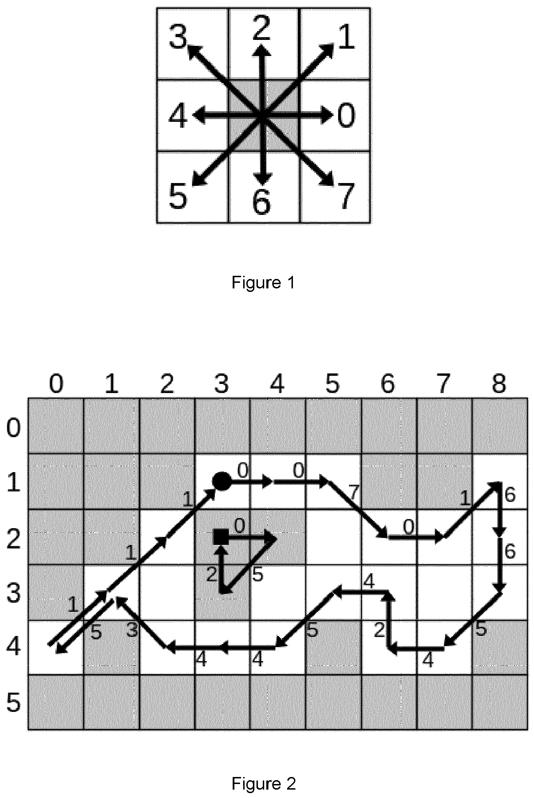

b) tracing an outer boundary of a region from the found starting pixel in a clockwise or counter-clockwise direction, and generating an 8-directional Freeman chain code using symbols from 0 to 7, which represent steps in specific directions as shown in Figure 1 and explained below, wherein the walk-about of region by moving along its edge is a well-known procedure;

c) adding the region data to a list of image regions, which comprises coordinates of the starting pixel and the chain code of the region;

d) colouring the region by inverting all pixels within its outer boundary in any suitable way, preferably using the same steps as used by the decoding procedure described later, which turns off all pixels of the region just processed in order to exclude them from further processing, while turning on the pixels of the nested holes, which are later encoded as independent regions;

e) calculation of necessary space for storing individual chain codes and a table of offsets at which the coded regions will be stored in the binary stream, so that during the decoding individual threads know from where to where the encoded region data extend;

f) storing a header with metadata about the image in a binary format according to the invention, which comprises an active colour label, image dimension, number of chain codes and encoded offsets of individual region records in a binary stream;

g) storing a body with the data of chain-coded regions in the binary format, which includes the coordinates of the starting pixel and sequentially coded chain code symbols in nibbles (4 bits), where the highest bit indicates a repetition of the current symbol.

The colouring of a region by inverting all the pixels in step d) can be done in any suitable way, but it is preferable to use a procedure that comprises the following steps:

- starting at the starting pixel of the region, then making the moves specified by successive chain code symbols, and performing the following steps in each pixel:
- determining the pixel type, which can be a left endpoint (L), a right endpoint (R), a left and right endpoint (LR), or a non-significant pixel (N);
- on-the-fly colouring of LR pixels and skipping of N pixels;
- using the left list to record the horizontal coordinates of L pixels and the right list to record the horizontal coordinates of R pixels, with visited L pixels always immediately pushed to the tail of the left list;
- pushing the visited pixel R to the tail of the right list if the left list is empty, otherwise removing the pixel L from the tail of the left list and colouring the open or closed segment between pixels L and R depending on their relative position;
- after returning to the start pixel, checking the state of the lists and, if they are not empty, emptying them by successively removing L pixels from the tail of the left list and R pixels from the head of the right list, and colouring the corresponding segments. The process terminates when both lists are empty.

The binary format, which represents another aspect of the invention and is the result of the encoding procedure, comprises a header and a body record where:

- the header record comprises marking of the active colour, the image dimension, the number of chain codes and coded offsets of individual region records in the binary stream, which contain the necessary information to determine the location of the last symbol of the chain code;
- the body record comprises for each region the coordinates of the starting pixel and sequentially encoded chain code symbols in nibbles, where the highest bit indicates the repetition of the current symbol.

Such format enables efficient parallel decoding with multiple processor threads.

The procedure for decoding and reconstructing a binary image according to the invention includes the following steps:

a) loading a binary stream with encoded regions from external storage into the computer's working memory;
b) decoding the data about active colour, image dimension and number of regions from the header of the binary stream;
c) initializing a bitmap of the appropriate dimension with the inverse of the active colour (if the active colour is 0, then it is 1, and vice versa);
d) parallel decoding and colouring of regions in the stream by inverting the corresponding bits (pixels) in the binary image, with each thread independently performing the following steps:

    i. atomically incrementing the processed regions counter to gain exclusive access to the region's data;
    ii. decoding the information about the record length of the corresponding region from the table of offsets;
    iii. decoding the location of the starting pixel of the region at the determined offset from the end of the offset table in the binary stream;
    iv. decoding a sequence of chain code symbols from consecutive nibbles that follow;
    v. determining the pixel type, which can be a left endpoint (L), a right endpoint (R), a left and right endpoint (LR), or a non-significant pixel (N);
    vi. on-the-fly colouring of LR pixels and skipping of N pixels;
    vii. using the left list to record the horizontal coordinates of L pixels and the right list to record the horizontal coordinates of R pixels, with visited L pixels always immediately pushed to the tail of the left list;
    viii. pushing the visited pixel R to the tail of the right list if the left list is empty, otherwise removing the pixel L from the tail of the left list and colouring the open or closed segment between pixels L and R depending on their relative position;
    ix. after returning to the start pixel, checking the state of the lists and, if they are not empty, emptying them by successively removing L pixels from the tail of the left list and R pixels from the head of the right list, and colouring the corresponding segments. The process terminates when both lists are empty.

The invention will be described in the continuation using the flowcharts for encoding and decoding, as well as with an embodiment, which are further explained by the figures that show:

Figure 1:    The symbols of Freeman's 8-directional chain code.

Figure 2: An example of chain code formation by traversing the region with a hole in clockwise direction.

Figure 3: Flowchart of the procedure for encoding and storing the encoded image in a binary stream.

Figure 4: Detailed structure of a binary stream with head and body.

Figure 5: An example of storing the encoded Figure 2 in a binary stream, where all values are written in the decimal system for ease of understanding.

Figure 6: Assignment of type labels to the pixels on the outer region boundary during chain code processing in image reconstruction.

Figure 7: Flowchart of the procedure for decoding and reconstructing an image from a binary stream.

Figure 8: Steps of the decoding and reconstruction procedure for one of the regions from Figure 2.

Figure 1 shows the directions from the current pixel that define the code. So, upward movement is indicated by the number 2, downward movement by the number 6, right movement by the number 0, and left movement by the number 4. Up and down diagonal movements are indicated by the numbers 1, 3, 5 and 7, as shown in the figure. The codes may also be different, but the invention is described based on the direction codes shown in Figure 1.

Figure 2 shows an example of an image that has a region highlighted in white, which is the active colour, while the background is coloured gray. The region also has a nested hole. The first pixel of the active colour found is marked with a circle, the movements are then marked with the codes of Figure 1, and the boundary of the region is followed in ways known to the user familiar with the field. As is evident from the figure, the chain code of the region is 0070166542454435111. The starting pixel of the hole is indicated by a square. Both the region and the hole are coded with the same orientation, resulting in the chain code 052 for the hole.

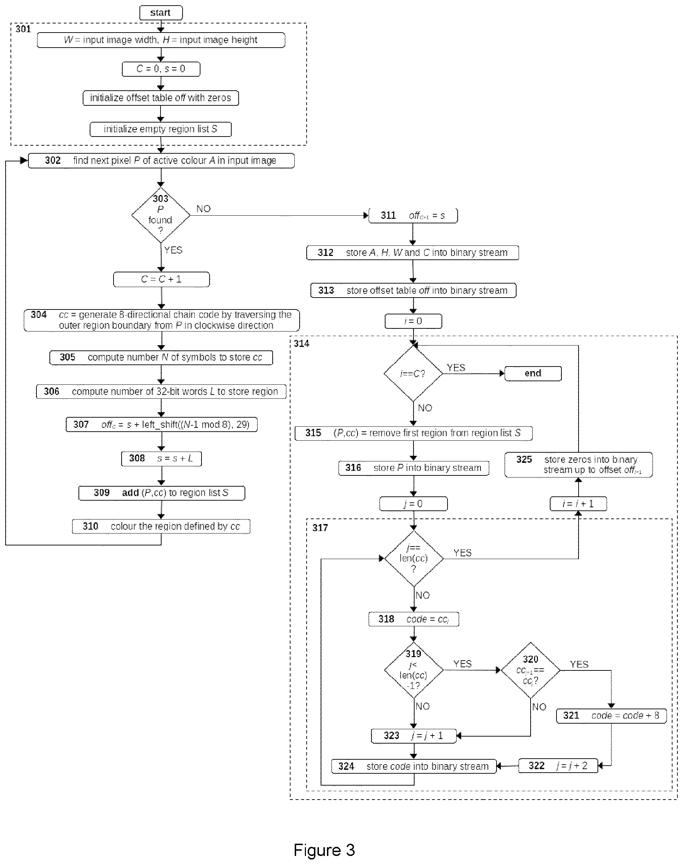

The procedure for encoding and writing the encoded binary image to a file is illustrated in Figure 3. The initialization (block 301) is followed by the search for the first pixel of the active colour A with the lowest vertical coordinate, which is found by sequentially scanning the rows of the image (block 302). If such an initial pixel exists (block 303), we follow the outer boundary of the region in a clockwise direction (block 304) and record the movements with the symbols of Freeman's 8-directional chain code (Figure 1). For this purpose, we can use a suitable adaptation of any of the existing procedures for tracing the boundaries of regions in binary images, e.g. Shim&Dorai, 1999.

For each of the encoded regions, we calculate on the fly the number of bytes needed for its binary notation. We use 4 bits (nibble) to store each symbol $cc_i$ of the chain code cc, thus achieving alignment of symbols with byte boundaries, which simplifies the decoding. Since three bits are sufficient to encode the movement direction, the excess bit is used as an indicator of whether the current movement is repeated immediately. In this case, we encode only the current move and skip the next one. In this way, we can partially or fully compensate for the increased space consumption of using 4 bits per chain code symbol, with larger savings for regions with longer horizontal, vertical, or diagonal segments. The total space to store the chain code thus depends on the shape of the region, and also includes 4 bytes to store the location of the starting pixel. The length of the record in bytes is additionally rounded up to the first multiple of 4 to achieve the alignment of region records in the binary stream with 32-bit offsets. Let $N_i$ denote the number of chain code symbols for the i-th region that need to be stored according to the repeating symbol encoding described above (block 305). In this case, the number of 32-bit words $L_i$ used to store the region in the binary stream is calculated according to the equation (block 306):

$$L_i = \left\lceil \frac{N_i}{8} \right\rceil + 1 \qquad\qquad (1)$$

This is followed by the encoding of the region data offset in the binary stream (block 307), which is calculated as the running sum of all previously calculated $L_i$ values (block 308). We use 4 bytes to store each individual offset, of which the lower 29 bits are used to encode the number of 32-bit words from the end of the offset table to the beginning of the region record. This limits the total record length of all string codes to $2^{31}$-1 bytes. The remaining three bits in the offset word are used to store the number of chain code symbols, which are stored in the last 32-bit word, reduced by one. With the help of this information the actual number of stored chain code symbols, which do not necessarily take up the entire last word, can be computed during decoding.

The chain code of the region is added to the list of regions (block 309) and the colouring of the region is performed by inverting all pixels within its boundary, for which the same procedure as for decoding described later (block 310) can be used. As a result, any holes in the region are repainted with the active colour and will later be extracted as independent regions in the same way as the current region (Figure 2). The proposed procedure differs from existing approaches that encode regions with holes by forming oppositely oriented chain codes for the outer and inner boundaries of the object. This kind of discrimination is not necessary in the case of binary images that are used as masks, while uniform coding of all regions enables simpler and order-independent decoding during image reconstruction. Colouring of a region is followed by the search for the next pixel of active colour along the image rows from the last found location, and encoding the next region found. The process is repeated until there are no more pixels of active colour in the image.

After the chain coding of regions is completed, we append to the offset table the offset value that the next region would have, if it existed (block 311). This enables the calculation of the length of the last chain code during decoding. Storing absolute offsets instead of chain code lengths allows for more efficient multi-threaded parallel decoding.

The encoded image is stored in the form of a binary stream as follows:

- in the first bit we store the active colour A, i.e., the colour of the regions encoded in the continuation of the binary stream,
- the next 15 bits are used to store the image height H, and the next two bytes are used to record its width $W$, which makes it possible to encode images up to 32768×65536 pixels in size;
- in the next four bytes we store the number of chain codes C, which is limited to $2^{32}-1$ (block 312);
- this is followed by a table of offsets at which individual region data start in the binary stream, which requires (C+1)×4 bytes (block 313);
- in the continuation, for each of the regions (block 314), which are sequentially removed from the list of regions S (block 315), the 16-bit coordinates of the starting pixel P relative to the upper left corner of the image are stored in the first four bytes (block 316). This is followed by the symbols of the corresponding chain code cc (block 317) with 4 bits (nibble) per symbol, whereby the less significant three bits are used to record the direction of movement (block 318), and the highest bit is used to mark repeated symbols. When storing the symbol $cc_j$, in case it is not the last one (block 319), we check whether the next symbol $cc_j+1$ is the same as the current one (block 320). If this is true, it is indicated by setting the highest bit of the $cc_j$ nibble (block 321) and the symbol $cc_j+1$ is skipped (block 322). Otherwise, we move to the next symbol (block 323) and store the current one to the binary stream (324).

Because the lengths of chain code records are rounded to 4 bytes, the code can terminate in the middle of the last 32-bit word. For this reason, we use the encoding described earlier, in which the number of valid elements in the last word is reduced by one and stored in the upper three bits of the region offset. The extra nibbles of the last word are filled with zeros (block 325).

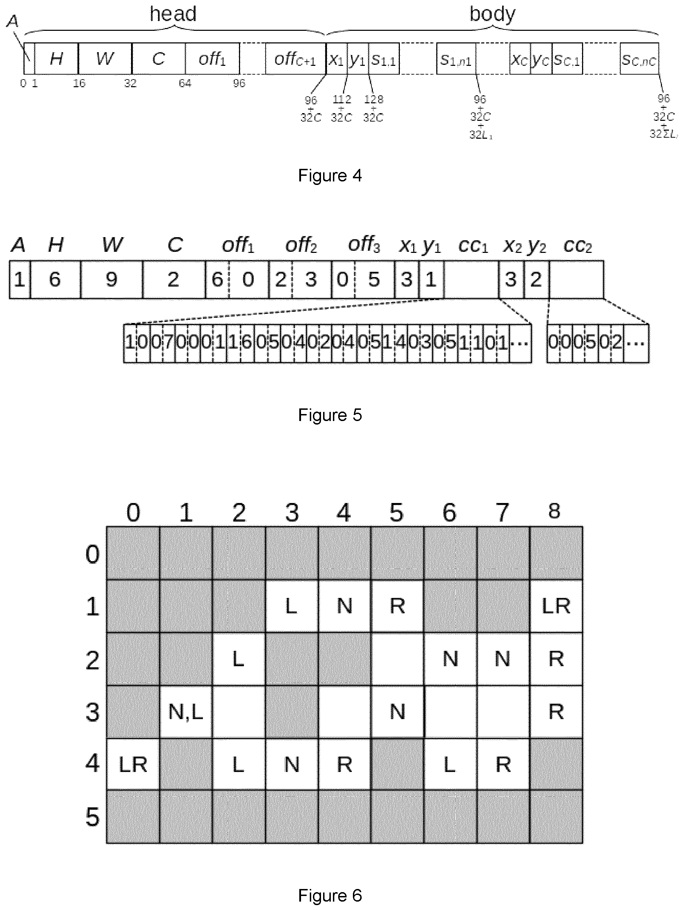

The complete structure of the binary stream, divided into a header with metadata and a body with region descriptions, is shown in Figure 4, while Figure 5 shows an example of encoding the binary mask from Figure 2, where the chain code of the white-coloured region is 0070166542454435111, and the code of the nested hole is 052.

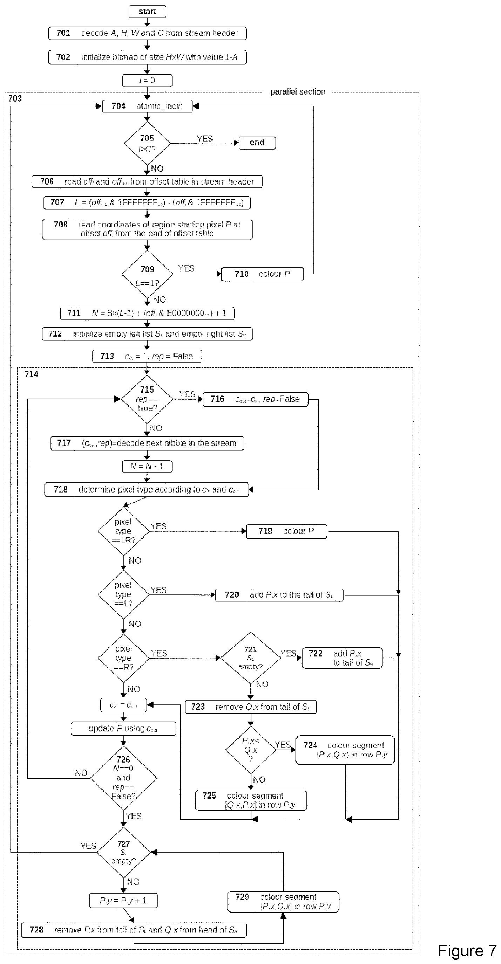

When decoding and reconstructing a binary image (Figure 7), the binary stream is first loaded entirely into the fast memory of the computer. From the first two bytes, we decode the active colour A, the image dimension, and the number C of regions stored in the stream (block 701). A bitmap of the appropriate size is created, which is the basis for image reconstruction, and initialized to the value 1-A, i.e., the inverse of active colour A (block 702). To represent a bitmap, we use a 2D array of 64-bit unsigned integers, where the number of rows of the field is equal to H, and the number of columns is $\lceil W/64 \rceil$. Excess bits in the last element of each row are unused.

The rest of the procedure is performed in parallel using multiple threads (block 703). Each thread obtains the index i of the next region by atomically incrementing the shared counter (block 704). If the counter value is greater than C, the thread terminates (block 705). Otherwise, the 32-bit values $off_i$ and $off_i+1$ are read from the offset table, which specify the beginning of the current and next region records in the binary stream (block 706). From the lower 29 bits of the two values, the difference L is calculated, which represents the number of 32-bit words used for the current region (block 707). At the offset $off_i$ from the end of the offset table, the 16-bit coordinate values of the starting pixel of the region are first read (block 708). If the region consists of a single pixel (block 709), the starting pixel is coloured (i.e. inverted) and the procedure returns to the checking of the region counter (block 710). Otherwise, the value of the upper three bits of $off_i$ is incremented by 1 to determine the number m of chain code symbols written in the last 32-bit word. Based on L and m, the total number $N=8\times(L-1)+m$ of nibbles in the stream is computed that determine the chain code symbols and their repetitions (block 711). This is followed by the initialization of the left and the right list (block 712), and the generation of the chain code by sequentially decoding N subsequent nibbles (block 714), where each symbol stored in the lower three bits is repeated (block 716) if the highest bit is set. The reconstruction of the binary image is performed simultaneously with the decoding of the chain code, so that the corresponding region in the image is coloured on the fly. The colouring is performed along the horizontal segments of image rows by inverting the corresponding bits in the 2D array using the XOR operation, due to which the processing order of chain codes can be arbitrary. To avoid race conditions between threads, memory operations are performed by atomically locking individual image rows in which segment colouring is performed. We use two lists to note the horizontal segments of pixels that need to be coloured. During the decoding of the chain code (block 717), the consecutive pair of decoded symbols is used to determine whether the current pixel represents the left (L) or the right (R) endpoint of the row segment to be coloured (block 718). Pixels that are visited several times can acquire several different labels (Figure 6). A pixel can be both a left and a right endpoint (LR) of a segment (i.e., an isolated edge pixel) or none of these (i.e., an interior (N) pixel of a segment).

Let $c_{in}$ denote the symbol for entering the current pixel, and $c_{out}$ the symbol for leaving the pixel. The initial entering direction is initialized to 1, which allows the region's starting pixel type (L or LR) to be correctly determined based on subsequent move directions (block 713). To determine the type of edge pixel, we use the following criterion:

$$PixelType = \begin{cases} L, & \text{if } \left\lfloor \frac{r}{4} \right\rfloor > \left\lfloor \frac{c_{\text{out}}}{4} \right\rfloor \\ R, & \text{if } \left\lfloor \frac{r}{4} \right\rfloor < \left\lfloor \frac{c_{\text{out}}}{4} \right\rfloor \\ LR, & \text{if } \left\lfloor \frac{r}{4} \right\rfloor = \left\lfloor \frac{c_{\text{out}}}{4} \right\rfloor \text{ and } r < c_{\text{out}} \\ N, & \text{otherwise} \end{cases} \tag{2}$$

where:

$$r = (c_{\text{in}} + 3) \bmod 8. \tag{3}$$

Internal pixels of segments are simply skipped during processing. Isolated edge pixels, which are both the left and the right endpoint of a segment in the current row, are coloured immediately (block 719). The horizontal coordinates of the pixels that are left only endpoints are always added to the tail of the left list (block 720). If we come across the right endpoint, we first check whether the left list is empty (block 721). In this case, we append the horizontal coordinate of the right endpoint to the tail of the right list (block 722), otherwise we remove the coordinate $x_L$ from the tail of the left list (block 723) and perform the colouring of the segment in the current row between $x_L$ and the current pixel's horizontal coordinate $x_R$. In the case of $x_R < x_L$, the colouring is performed on the open interval $(x_R, x_L)$, i.e. without including the edge pixels (block 724), otherwise it is performed on the closed interval $[x_L, x_R]$, i.e. by including the edge pixels (block 725). Chain code processing is completed when all symbols have been examined (block 726). After completing the walk-about, we check whether the left list is empty (block 727). Any remaining coordinates in the left and right lists are removed in pairs (block 728), with L pixels removed at the tail of the left list and R pixels at the head of the right list. For each pair of pixels L and R, the colouring of the corresponding closed segment is performed (block 729). This completes the processing of the current region and returns to checking of the region counter. The complete flow chart for decoding the binary stream and reconstructing the binary image from the chain code is presented in Figure 7.

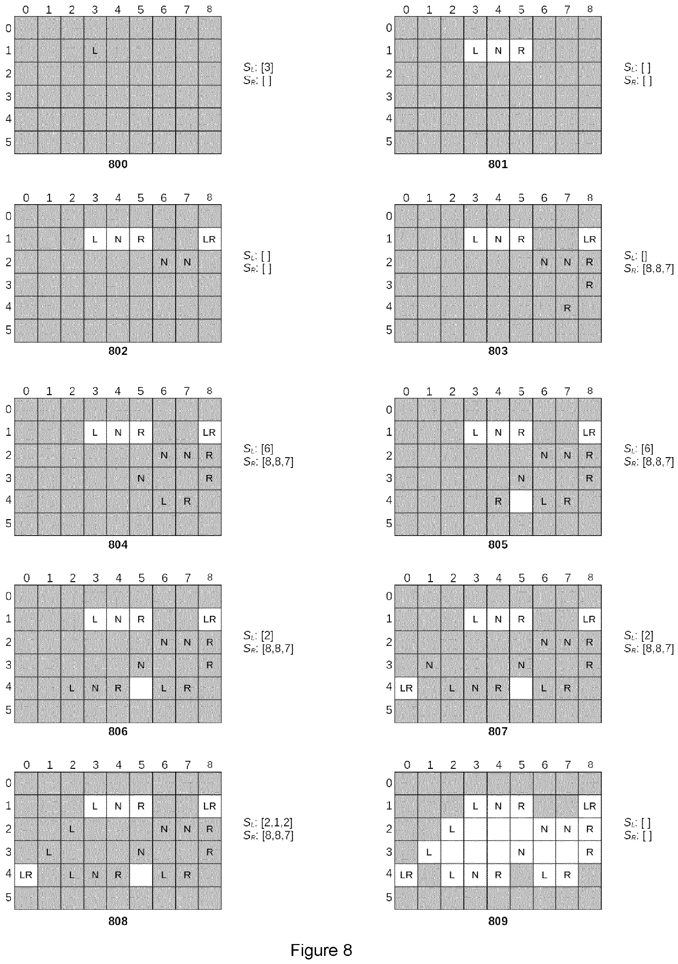

Figure 8 shows the sequence of steps when processing the region from Figure 2. We start the procedure in the starting pixel (3,1), which is added to the left list (Figure 800). The next pixel (4,1) is of type N and is skipped. The pixel (5,1) is of type R, so we remove the pixel L from the tail of the left list and colour the segment [3,5] in the current row (Figure 801). Next are pixels (6,2) and (7,2), which are of type N and are skipped. The pixel (8,1) is of the LR type, so we immediately colour it (Figure 802). The next three pixels (8,2), (8,3) and (7,4) are of type R and are added to the tail of the right list because the left one is empty (Figure 803). Pixel (6,4) is of type L and is added to the left list, but pixel (5,3) is skipped (Figure 804). Pixel (4,4) is of type R, so we remove pixel L from the tail of the left list. Since pixel R is to the left of pixel L, we colour the open interval (4,6) (Figure 805). Pixel (3,4) is skipped, and pixel (2,4) is added to the left list (Figure 806). On the first visit, pixel (1,3) is of type N and is skipped, while pixel (0,4) is of type LR and is coloured (Figure 807). The second visit to pixel (1,3) marks it as L and adds it to the left list, while the last pixel is (2,2), which is also added to the left list (Figure 808). After returning to the starting pixel (3,1), we successively pick pairs of pixels from the tail of the left and the head of the right list and colour the closed segments [2,8], [1,8] and [2,7] in successive rows of the image. This changes the colour of pixel (5,4) back to the background colour (Figure 809). Decoding the hole in Figure 2 would proceed in a similar way, with the flip of pixels (3,2), (4,2), and (3,3) changing their colour back to the background colour.

### Claims

1. A procedure for encoding a binary image containing regions of arbitrary shapes with nested holes up to an arbitrary level, **characterized in that** the procedure comprises the following steps:

   a) finding a starting pixel of an active colour, which is defined by a user, by sequentially scanning the rows of the input image;
   b) generating an 8-directional chain code by tracing an outer boundary of a region from the starting pixel found in step a) in a clockwise or counter clockwise direction;
   c) adding data of the region determined in step b) to a list of regions, which comprises coordinates of the starting pixel and the chain code of the region;

d) colouring the region determined in step b) by inverting all pixels of the region in any suitable manner, which turns embedded holes into independent regions;

e) calculation of necessary space for storing individual chain codes and a table of offsets at which coded regions will be stored in a binary stream, where each offset encodes the number of 32-bit words from the end of the offset table to the beginning of the corresponding region's record in the binary stream and the number of chain code symbols stored in the last 32-bit word;

f) storing the header with metadata about the chain-coded binary image in a binary format, which comprises an active colour label, image dimension, the number of chain codes deteremined in previous steps and the table of offsets of individual region records in the binary stream; and

g) storing a body comprising data of chain-coded regions in the binary format, which comprises coordinates of the starting pixel and sequentially coded chain code symbols in nibbles, wherein the highest bit indicates a repetition of the current symbol.

2. The procedure according to claim 1, wherein steps a) to to e) are repeated until the input image no longer contains any pixels of active colour.

3. The procedure according to claim 1 or 2, wherein step d) is carried out with the following steps:

- starting the procedure at the start pixel of the region, then making the moves specified by successive chain code symbols, and performing the following steps in each pixel:

◦ determining the pixel type, which can be a left endpoint (L), a right endpoint (R), a left and right endpoint (LR), or a non-significant pixel (N);
◦ on-the-fly colouring of LR pixels and skipping of N pixels;
◦ using the left list to record the horizontal coordinates of L pixels and the right list to record the horizontal coordinates of R pixels, with visited L pixels always immediately pushed to the tail of the left list;
◦ pushing the visited pixel R to the tail of the right list if the left list is empty, otherwise removing the pixel L from the tail of the left list and colouring the open or closed segment between pixels L and R depending on their relative position;
◦ after returning to the starting pixel, checking the state of the lists and, if they are not empty, emptying them by successively removing L pixels from the tail of the left list and R pixels from the head of the right list, and colouring the corresponding segments. The process terminates when both lists are empty.

4. The procedure according to any of the preceding claims, where in step f) the calculated number of 32-bit words between the end of the offset table and the beginning of the chain code is stored in the lower 29 bits of the offset.

5. The procedure according to any of the preceding claims, where in step f) the number of chain code symbols that are stored in the last 32-bit word of the corresponding region record is reduced by one and stored in the highest three bits of the offset.

6. The procedure according to any of the preceding claims, where in step g) the chain code symbols are stored in the lower three bits of consecutive nibbles, whereby no symbol identical to the previous symbol is stored, unless the previous symbol was also marked as repeated.

7. The procedure according to any of the preceding claims, where in step g) the repetition of the current chain code symbol is indicated by setting the highest bit in the corresponding nibble, and the next symbol is skipped and not stored in the binary stream.

8. A binary stream generated by the procedure according to any of the preceding claims, wherein the binary stream has the following format:

- the header comprises the active colour, the image dimension, the number of chain codes and the encoded offsets of individual region records in the binary stream, which contain the necessary information to determine the location of the last symbol of the chain code;
- the body includes the coordinates of the starting pixel and sequentially encoded chain code symbols in nibbles, where the highest bit indicates the repetition of the current symbol.

9. The binary format according to claim 8, wherein:

   - the active colour A is stored in the first bit,
   - the next 15 bits store the image height, and the next two bytes store the image width,
   - the next four bytes store the number of chain codes C, which is limited to $2^{32}-1$,
   - followed by a table of offsets to the beginnings of individual region records in the binary stream, which requires $(C+1)\times 4$ bytes,
   - followed by the data for each of the regions in the image, wherein the first four bytes store the 16-bit coordinates of the starting pixel of the corresponding region relative to the upper left corner of the image, followed by the symbols of the chain code with 4 bits per symbol, where the least significant three bits are used to store the move direction, and the highest bit is used to mark repeated symbols.

10. A procedure for decoding and reconstructing a binary image from the binary stream according to claim 8 or 9, **characterized by** including the following steps:

    a) loading the binary stream with encoded regions from an external storage;
    b) decoding the data about active colour, image dimension and number of regions from the header of the binary stream;
    c) initializing an image of the appropriate dimension with the inverse of the active colour;
    d) parallel decoding and colouring of regions stored in the stream by inverting the corresponding bits (pixels) in the binary image, with each thread independently performing the following steps:

       i. atomically incrementing the counter of processed regions in order to gain exclusive access to the region's data;
       ii. decoding the information about the corresponding region's record length from the table of offsets;
       iii. decoding the location of the region's starting pixel at the determined offset from the end of the offset table in the binary stream;
       iv. decoding a sequence of chain code symbols from nibbles that follow;
       v. determining the pixel type (L, R, LR or N);
       vi. on-the-fly colouring of LR pixels and skipping of N pixels;
       vii. using the left list to record the horizontal coordinates of L pixels and the right list to record the horizontal coordinates of R pixels, with visited L pixels always immediately pushed to the tail of the left list;
       viii. pushing the visited pixel R to the tail of the right list if the left list is empty, otherwise removing the pixel L from the tail of the left list and colouring the open or closed segment between pixels L and R depending on their relative position; and
       ix. after returning to the start pixel, checking the state of the lists and, if they are not empty, emptying them by successively removing L pixels from the tail of the left list and R pixels from the head of the right list, and colouring the corresponding segments.

11. The procedure according to claim 10, wherein in step v. equations (2) and (3) are used to determine the current pixel type.

12. The procedure according to claim 10 or 11, where in steps vii. and viii. the control logic is reversed so that R pixels are always added to the right list, and for L pixels a check is made for the existence of an R pixel in the right list, in which case the colouring of corresponding open or closed segment is performed, otherwise pixel L is added to the left list.

13. A computer program comprising executable instructions for performing the procedure according to any claims from 1 to 7 and/or 10 to 12.

14. A computer readable medium comprising the computer program according to claim 13.

Figure 1

Figure 2

start

**301**
$W$ = input image width, $H$ = input image height

$C = 0$, $s = 0$

initialize offset table *off* with zeros

initialize empty region list $S$

**302**  find next pixel $P$ of active colour $A$ in input image

**303**
$P$
found
?

NO → **311**  $off_{C+1} = s$

**312**  store $A$, $H$, $W$ and $C$ into binary stream

**313**  store offset table *off* into binary stream

$i = 0$

YES

$C = C + 1$

**304**  $cc$ = generate 8-directional chain code by traversing the outer region boundary from $P$ in clockwise direction

**305**  compute number $N$ of symbols to store $cc$

**306**  compute number of 32-bit words $L$ to store region

**307**  $off_C = s$ + left_shift(($N$-1 mod 8), 29)

**308**  $s = s + L$

**309**  **add** ($P$,$cc$) to region list $S$

**310**  colour the region defined by $cc$

**314**

$i==C$?  YES → end

NO

**315**  ($P$,$cc$) = remove first region from region list $S$

**316**  store $P$ into binary stream

$j = 0$

**325**  store zeros into binary stream up to offset $off_{i+1}$

$i = i + 1$

**317**

$j==$
len($cc$)
?  YES

NO

**318**  $code = cc_j$

**319**
$j<$
len($cc$)
-1?  YES → **320** $cc_{j+1}==$ $cc_j$?  YES

NO

NO

**321**  $code = code + 8$

**323**  $j = j + 1$

**322**  $j = j + 2$

**324**  store $code$ into binary stream

Figure 3

head | body

| A | H | W | C | off₁ | ... | off_{C+1} | x₁ | y₁ | s_{1,1} | ... | s_{1,n1} | ... | x_C | y_C | s_{C,1} | ... | s_{C,nC} |

$$A$$

Figure 4

| A | H | W | C | off₁ | off₂ | off₃ | x₁ | y₁ | cc₁ | x₂ | y₂ | cc₂ |
| 1 | 6 | 9 | 2 | 6 | 0 | 2 | 3 | 0 | 5 | 3 | 1 | | 3 | 2 | |

1 0 0 7 0 0 0 1 1 6 0 5 0 4 0 2 0 4 0 5 1 4 0 3 0 5 1 1 0 1 ...    0 0 0 5 0 2 ...

Figure 5

Figure 6

Figure 7

$S_L$: [3]
$S_R$: [ ]

800

$S_L$: [ ]
$S_R$: [ ]

801

$S_L$: [ ]
$S_R$: [ ]

802

$S_L$: []
$S_R$: [8,8,7]

803

$S_L$: [6]
$S_R$: [8,8,7]

804

$S_L$: [6]
$S_R$: [8,8,7]

805

$S_L$: [2]
$S_R$: [8,8,7]

806

$S_L$: [2]
$S_R$: [8,8,7]

807

$S_L$: [2,1,2]
$S_R$: [8,8,7]

808

$S_L$: [ ]
$S_R$: [ ]

809

Figure 8

17

Europäisches
Patentamt

European
Patent Office

Office européen
des brevets

# EUROPEAN SEARCH REPORT

Application Number

EP 23 15 2106

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GLOBACNIK T ET AL: "An efficient raster font compression for embedded systems", PATTERN RECOGNITION, ELSEVIER, GB, vol. 43, no. 12, 1 December 2010 (2010-12-01), pages 4137-4147, XP027260737, ISSN: 0031-3203 [retrieved on 2010-09-02] | 1,2,4, 6-9,13, 14 | INV. G06T9/20 |
| A | * the whole document * | 3,5, 10-12 | |
| | ----- | | |
| A | US 2016/086353 A1 (LUKAC NIKO [SI] ET AL) 24 March 2016 (2016-03-24) * paragraphs [0040], [0042] * | 1-14 | |
| | ----- | | |

TECHNICAL FIELDS
SEARCHED (IPC)

G06T

The present search report has been drawn up for all claims

| Place of search | Date of completion of the search | Examiner |
|---|---|---|
| Munich | 13 June 2023 | Oelbaum, Tobias |

## ANNEX TO THE EUROPEAN SEARCH REPORT
## ON EUROPEAN PATENT APPLICATION NO.

**EP 23 15 2106**

This annex lists the patent family members relating to the patent documents cited in the above-mentioned European search report.
The members are as contained in the European Patent Office EDP file on
The European Patent Office is in no way liable for these particulars which are merely given for the purpose of information.

**13-06-2023**

| Patent document cited in search report | Publication date | Patent family member(s) | Publication date |
|---|---|---|---|
| US 2016086353 A1 | 24-03-2016 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0375805 B1
- US 5577134 A
- US 8340446 B2
- US 5995670 A
- CN 109035351 A
- US 6937765 B2
- US 6173075 B1
- DE 102005045394 B4

**Non-patent literature cited in the description**

- **CAI.** Restoration of Binary Images Using Contour Direction Chain Codes Description. *Computer Vision, Graphics and Image Processing,* 1988, vol. 41, 101-106
- **ALI ; BURGE.** A New Algorithm for Extracting the Interior of Bounded Regions Based on Chain Coding. *Computer Vision, Graphics and Image Processing,* 1988, vol. 43, 256-264
- **TANG ; LIEN.** Region Filling with the use of the discrete Green theorem. *Computer Vision, Graphics and Image Processing,* 1988, vol. 42, 297-305
- **CHANG ; LEU.** A Fast Algorithm for the Restoration of Images Based on Chain Codes Description and Its Applications. *Computer Vision, Graphics and Image Processing,* 1990, vol. 50, 296-307
- **SHIH ; WONG.** Reconstruction of Binary and Gray-Scale Images from Mid-crack Code Descriptions. *Journal of Visual Communication and Image Representation,* 1993, vol. 4 (2), 121-129
- An Improved Fast Algorithm for the Restoration of Images Based on Chain Codes Description. *CVGIP: Graphical Models and Image Processing,* 1994, vol. 56 (4), 348-351
- **LEJUN ; HAO.** A New Contour Fill Algorithm for Outlined Character Image Generation. *Computers & Graphics,* 1995, vol. 19 (4), 551-556
- A Generalized Region Labeling Algorithm for Image Coding, Restoration, and Segmentation. *Proceedings 1999 International Conference on Image Processing,* 1999, 46-50
- **REN et al.** A new and fast contour-filling algorithm. *Pattern Recognition,* 2005, vol. 38, 2564-2577
- **CODREA ; NEVELAINEN.** Note: An algorithm for contour-based region filling. *Computers & Graphics,* 2005, vol. 29, 441-450
- **HONG et al.** Flotation Bubble Seed Image Filling Algorithm Based on Boundary Point Features. *International Journal of Mining Science and Technology,* 2012, vol. 22, 289-293
- **LIU.** A Fast Filling Algorithm for Image Restoration Based on Contour Parity. *Computers, Materials & Continua,* 2020, vol. 63 (1), 509-519